# EUROPEAN PATENT SPECIFICATION

(11) **EP 4 375 513 B1**
(45) Date of publication and mention of the grant of the patent: **07.10.2026**
(21) Application number: 23211745.7
(22) Date of filing: 23.11.2023
(51) Int. Cl.: F04D 15/00, F04B 49/24, G05D 7/06, G01F 1/36, F04B 51/00, F04C 14/28

(54) **SYSTEM AND METHOD FOR CONTROLLING FLUID FLOW WITH A PRESSURE RELIEF VALVE**
SYSTEM UND VERFAHREN ZUR STEUERUNG EINES FLUIDSTROMS MIT EINEM ÜBERDRUCKVENTIL
SYSTÈME ET PROCÉDÉ DE COMMANDE D'ÉCOULEMENT DE FLUIDE AVEC UNE SOUPAPE DE SURPRESSION

(30) Priority: 25.11.2022 US 202217994211
(43) Date of publication of application: 29.05.2024
(73) Proprietor: PRATT & WHITNEY CANADA CORP., Longueuil, Québec J4G 1A1 (CA)
(72) Inventor: ALECU, Daniel, (01BE5) Longueuil, J4G 1A1 (CA); DIOSADY, Laslo T., (01BE5) Longueuil, J4G 1A1 (CA)
(74) Representative: Dehns

(56) References cited:
- JP-A- S5 812 017
- US-A- 4 124 332
- US-A- 5 563 351
- US-A1- 2015 125 313
- US-A1- 2016 195 083
- US-A1- 2019 234 777

## Description

### BACKGROUND OF THE INVENTION

### 1. Technical Field

The present disclosure relates to fluid flow systems with pressure relief valves in general, and to fluid flow systems configured to control pressure relief valve operation in particular.

### 2. Background Information

Fluid supply systems often include a fluid pump and a pressure relief valve (PRV) connected across the fluid pump and one or more components downstream of the fluid pump. A PRV pressure sensor is disposed to sense the fluid pressure upstream of the heat exchanger may be used to provide signal information to the PRV that can be used in the control of the PRV. The PRV and PRV pressure sensor are intended to facilitate maintaining fluid flow rate in a steady state mode. In a steady state mode, the fluid pump delivers exactly the amount of fluid required by the downstream components. Pressure oscillations are a common occurrence in such a system and may have multiple causes. In some cases, pressure oscillations may be caused by the PRV "hunting" and can reach destructive levels. Small changes in pump speed that increase the inlet fluid flow rate into downstream components may shift the system from a steady state mode to a non-steady state mode.

What is needed is a system, system components, and/or method that improve the ability of a fluid supply system to address changes in fluid flow rate and thereby facilitate system operation in a steady state mode.

US 4124332 A and US 2015/125313 A1 disclose prior art automatically operative pumping equipment.

### SUMMARY

According to an aspect of the claimed invention, a fluid supply system is provided according to claim 1.

In any of the aspects or embodiments described above and herein, the control orifice inner diameter may be no greater than half the first inner diameter.

In any of the aspects or embodiments described above and herein, the second inner diameter may be at least twice the control orifice inner diameter.

In any of the aspects or embodiments described above and herein, the control orifice has an axial length, and may have an axial length over control orifice inner diameter ratio that is less than one.

In any of the aspects or embodiments described above and herein, the control orifice has an axial length, and may have an axial length over control orifice inner diameter ratio that is at least two.

According to an aspect of the claimed invention, a fluid supply system is provided according to claim 6.

In any of the aspects or embodiments described above and herein, the UO has a UO axial length, and the UO axial length may be in the range of about two to three times the UO inner diameter.

In any of the aspects or embodiments described above and herein, the SC has a SC inner diameter and a SC axial length, and the SC axial length may be in the range of one SC inner diameter to three SC inner diameters.

In any of the aspects or embodiments described above and herein, the sensing orifice of the SC has a diameter that may be less than about twenty-five percent of the SC axial length.

In any of the aspects or embodiments described above and herein, the DO has a DO axial length, and the DO axial length may be in the range of about two to ten times the DO inner diameter.

In any of the aspects or embodiments described above and herein, the UO and the DO may be in line with one another.

According to an aspect of the claimed invention, a method of controlling fluid flow in a fluid supply system is provided according to claim 12.

In any of the aspects or embodiments described above and herein, the fluid monitoring device may be configured to operate in a lead domain, and may have a ratio of the DO inner diameter to the UO inner diameter in the range of about 1.100 to about 1.150.

In any of the aspects or embodiments described above and herein, the fluid monitoring device may be configured to operate in a lag domain, and may have a ratio of the DO inner diameter to the UO inner diameter in the range of about 1.000 to about 1.100.

The foregoing features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a schematic representation of a fluid flow system embodiment.
FIG. 2 is a schematic representation of a fluid flow system embodiment.
FIG. 3 is a schematic representation of a fluid flow system embodiment.
FIG. 4 is a diagrammatic representation of a fluid flow monitoring device.
FIG. 5 is a schematic representation of a fluid flow system embodiment.
FIG. 6 is a diagrammatic representation of a fluid flow monitoring device.
FIG. 7 is a graph of pressure difference as a function of the fluid flow rate, including a plurality of different data lines for different diameter ratios.

### DETAILED DESCRIPTION

The present disclosure is configured for use in liquid fluid supply systems. Examples of fluid types with which the present disclosure may be used include, but are not limited to, hydraulic fluid, fuel, oil, and water. Liquid fluid supply systems typically include a pressure pump provided with a pressure regulating valve (PRV) that is disposed to receive a flow of fluid bled off of the primary fluid flow passing to the pump ("PRV bleed flow"). Piping extends from the outlet of the PRV back to the primary flow exiting the pump, downstream of the pump. Whatever PRV bleed flow passes through the PRV reenters the primary fluid flow downstream of the pump. The PRV is in signal communication with a pressure sensor ("PRV pressure sensor") that is disposed downstream of the pump. The PRV is intended to operate in a manner that causes fluid flow demand to match fluid flow delivery. The term "pipe" or "piping" as used herein is intended to be a generic term meaning a fluid conduit operable to contain a fluid flow therethrough. The terms "upstream" and "downstream" are used herein to describe positioning based on fluid flow direction; e.g., if fluid flow encounters component A prior to encountering component B, then component B is downstream of component A, and component A is upstream of component B.

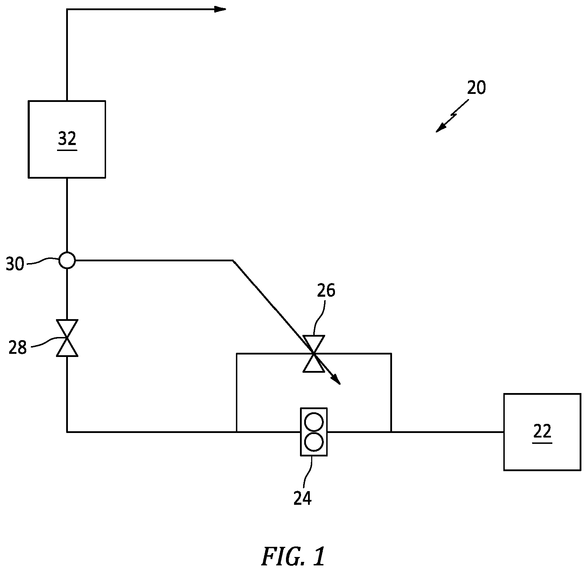

FIG. 1 is a diagrammatic representation of a fluid supply system 20 that includes a fluid tank 22, a fluid pump 24, a PRV 26 connected across the fluid pump 24, a flow restrictor 28, a PRV pressure sensor 30, and a fluid heat exchanger 32. The heat exchanger 32 represents a device containing a volume of fluid, and the present disclosure is not limited to including a heat exchanger 32. In a steady state mode, the fluid pump 24 delivers exactly the amount of fluid required by the heat exchanger 32 and the fluid is discharged from the heat exchanger 32 at a heat exchanger 32 internal constant pressure. The PRV pressure sensor 30 is disposed to sense the fluid pressure upstream of the heat exchanger 32. The PRV 26 and PRV pressure sensor 30 are intended to facilitate maintaining fluid flow rate in a steady state mode. The fluid supply system 20 is shown including a heat exchanger 32 as an example of a system component that contains fluid within the fluid supply system 20. Present disclosure embodiments may include a component configured to contain a volume of fluid other than a heat exchanger 32.

Pressure oscillations are a common occurrence in such a system 20 and may have multiple causes. In some cases, pressure oscillations may be caused by the PRV 26 "hunting" and can reach destructive levels. A small change in pump 24 speed that increases the inlet fluid flow rate into the heat exchanger 32 by an amount (Δ fluid flow) may shift the system 20 out of a steady state mode. More specifically, the change in fluid flow rate may cause the fluid pressure in the heat exchanger 32 to increase at a rate that is proportional to the change in fluid flow rate. Depending on the location of the PRV pressure sensor 30 providing data to the PRV 26, the pressure sensor 30 may initially report no change in pressure to the PRV 26, or in some cases the pressure sensor 30 may report a small drop in fluid pressure. If the pressure sensor data indicates no change in pressure to the PRV 26, there is no impetus for the PRV 26 to act, or if the pressure sensor data indicates a slight drop in pressure to the PRV 26, then the PRV 26 may act in response to that slight pressure drop and begin moving in a closing direction. If the PRV 26 does begin to close, then the rate of fluid flow that is passed through the PRV 26 is decreased and the fluid flow that is passed through the pump is increased by an amount that would have otherwise passed through the PRV 26.

After some period of time with the increased fluid flow, the fluid pressure in the heat exchanger 32 will increase and a pressure wave will propagate upstream from the heat exchanger 32. Eventually, the PRV pressure sensor 30 will sense the increase in fluid pressure and produce signals representative of the same to the PRV 26. In response, the PRV 26 will operate to address the increase in pressure / deviation from the steady state mode; e.g., the PRV 26 will reverse the closing movement to an opening movement, or move from its steady state configuration and begin movement towards a more open configuration. This PRV 26 operation is, however, delayed by some amount of time from the action that created the increase in pressure; i.e., the increase in fluid flow from fluid pump 24. Very often, the delayed PRV 26 reaction based on the PRV pressure sensor 30 signals results in the PRV 26 overreacting (i.e., "overshooting"). The fluid flow adjustment process may then reverse in response to the overshoot. This pressure oscillation (and the related opening / closing movement of the PRV 26) may dampen or may amplify indefinitely, the condition being dependent on a whole set of parameters defining the system dynamic characteristics. In the theory of feedback control the condition is often referred to as a "loss of phase margin"; i.e., the feedback correction action is belated and fails to compensate the error.

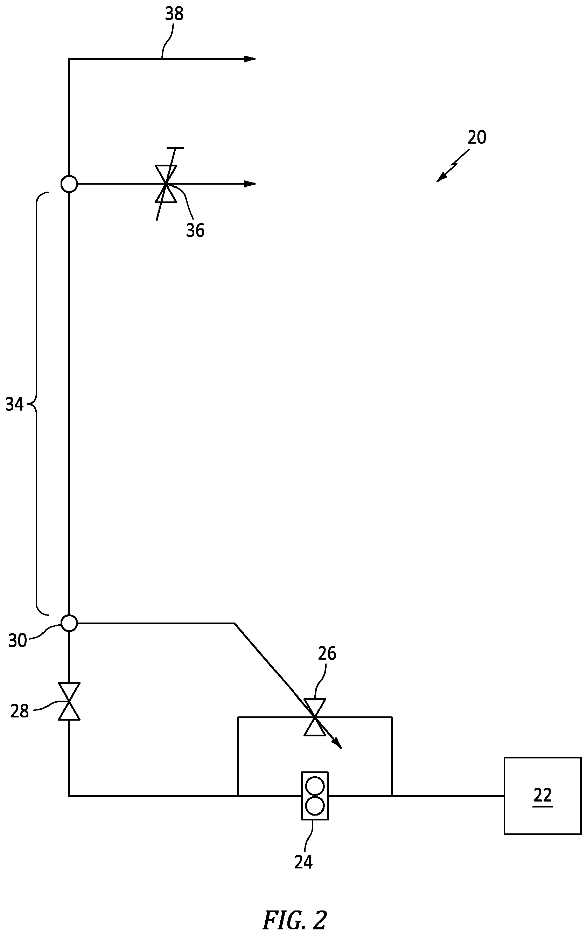

FIG. 2 is a diagrammatic representation of a fluid supply system 20 that includes a fluid tank 22, a fluid pump 24, a PRV 26 connected across the fluid pump 24, a flow restrictor 28, a PRV pressure sensor 30, a long piping section 34, a distribution valve 36 connected to the long piping section 34, and an open branch 38 connected to the long piping section 34. A piping section may be considered "long" when the length of the pipe is about twenty-five percent (25%) or longer than the expected pressure wave wavelength at the frequency to be transported by the pipe, also taking into account the fluid properties (e.g., L >= C/f *0.25, where C = sqrt(bulk modulus of the fluid / density of the fluid). The PRV pressure sensor 30 is disposed to sense the fluid pressure upstream of the long piping section 34. The PRV 26 and PRV pressure sensor 30 are intended to operate in a manner that maintains the required fluid flow rate in a steady state mode.

During operation of the system 20 shown in FIG. 2, a transient condition may develop, for example, when the fluid pump 24 accelerates. The fluid pump 24 acceleration results in an increased fluid flow rate through the pump 24. However, fluid disposed in the long piping section 34 will impede the fluid flow rate increase due to fluid inertia. As a result, a back propagating pressure wave may develop that will be sensed by the PRV pressure sensor 30, and the PRV 26 may be controlled to move in an opening direction based on the PRV pressure sensor 30 signals. Once the fluid accelerates in the long piping section 34, however, the fluid pressure will drop at the PRV pressure sensor 30 and will continue to drop when the distribution valve 36 opens. The PRV pressure sensor 30 will then sense the fluid pressure drop and will produce signals that cause the PRV 26 to reverse; i.e., to change from moving in an opening direction to a moving in a closing direction. The described process may result in the PRV 26 "hunting" without converging to a steady state position.

Embodiments of the present disclosure are configured to decrease the potential for a liquid fluid supply system 20 to transition from a steady-state operating mode to a non-steady state operating mode, and/or to decrease the amount of time it takes for a liquid fluid supply system 20 in a non-steady state mode to transition to a steady state mode.

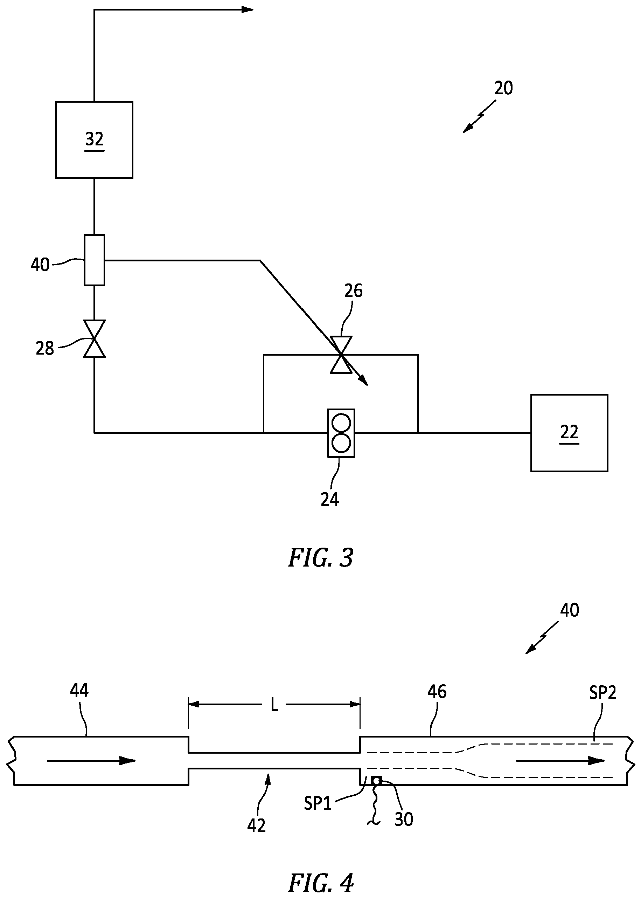

FIG. 3 is a nonlimiting example of a present disclosure fluid supply system 20 that includes a fluid flow monitoring device 40 that leverages a reverse proportionality between a variation in fluid flow rate within the system 20 and a sensed fluid pressure. The fluid supply system 20 may include a fluid tank 22, a fluid pump 24, a PRV 26 connected across the fluid pump 24, a flow restrictor 28, and a fluid flow monitoring device 40 that either includes a PRV pressure sensor 30 or is in communication with a PRV pressure sensor 30. The fluid supply system 20 is shown including a heat exchanger 32 as an example of a system component that contains fluid within the fluid supply system 20. Present disclosure embodiments are not limited to including a heat exchanger 32 or any other fluid system component unless indicated otherwise herein. The PRV 26 is a device having a fluid passage that can be controlled to vary between a closed configuration (fluid passage gate is closed to prevent fluid passing through the fluid passage) to a completely open position (fluid passage gate is open to its maximum). The PRV 26 may be controlled to a variety of different flow configurations between closed and fully open; e.g., 25% open, 50% open, 75% open, and the like. Control of the PRV 26 to achieve the desired degree of open/closed may be directly or indirectly based on an input signal produced by the PRV pressure sensor 30.

FIG. 4 is a diagrammatic illustration of the fluid flow monitoring device 40 that may be used in a fluid supply system 20 like that shown in FIG. 3. The fluid flow monitoring device 40 includes a control orifice 42 in fluid communication with a first section of piping 44 from the fluid pump 24 disposed upstream of the control orifice 42 and a second section of piping 46 disposed downstream of the control orifice 42. The control orifice 42 may be an orifice or other flow contraction configuration. The control orifice diameter may be less than the diameter of the first or second sections of piping 44, 46. Preferably, the control orifice diameter is half or less than the diameter of the upstream first section of pipe, and the downstream pipe diameter is about twice or more the control orifice diameter. The control orifice 42 diagrammatically shown in FIG. 4 has an axial length "L". In some embodiments, the axial length may be chosen so as to be long enough for the fluid flow entering the device 40 to become sufficiently axially organized (e.g., substantially more laminar than turbulent) within the control orifice 42 to cause the fluid flow exiting the control orifice 42 to travel a distance within the second section of piping 46 before substantially diffusing. The control orifice 42 length over diameter ("L/D") may be less than one (i.e. L/D < 1) or greater. Preferably, the L/D is > 2. A PRV pressure sensor 30 is disposed to sense fluid flow within the second section of piping 46 in close proximity to the junction between the control orifice 42 and the second section of piping 46; i.e., in the substantially undiffused region. The fluid flow monitoring device 40 may be configured to include the PRV pressure sensor 30 or may be configured to receive a PRV pressure sensor 30 that is independent of the fluid flow monitoring device 40.

During operation of the fluid flow system 20, fluid flow exiting the control orifice 42 of the fluid flow monitoring device 40 in close proximity to the junction between the control orifice 42 and the second section of piping 46 will form a fluid zone that has a static pressure SP1. The same fluid flow traveling further axially through the second section of piping 46 (away from the control orifice 42) will diffuse and will increase in static pressure (labeled as SP2), such that SP2 > SP1. During a transient fluid flow condition (e.g., an increase in fluid flow rate from the pump 24), the static pressure SP1 in close proximity to the junction between the control orifice 42 and the second section of piping 46 will decrease until the downstream static pressure SP2 increases (e.g., at a downstream component such as a heat exchanger). In fact, the static pressure SP1 is inversely related to the fluid flow rate through the fluid flow monitoring device 40; i.e., as the fluid flow rate through the control orifice 42 increases, the static pressure SP1 decreases. This inverse relationship may be referred to as a "reverse proportionality" between fluid flow rate variation and the pressure sensed by the PRV pressure sensor 30. This embodiment of the present disclosure leverages this fluid flow characteristic to provide signal information to the PRV 26 rapidly and as a result, the potential for a PRV 26 to overshoot and "hunt" is diminished and the ability to control fluid flow through the system 20 in a steady state manner is enhanced.

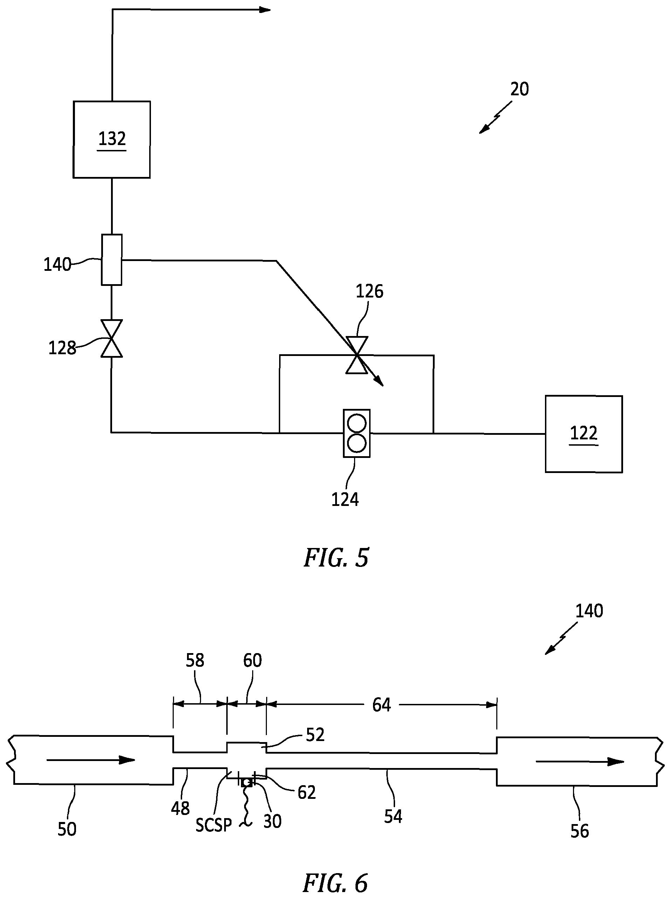

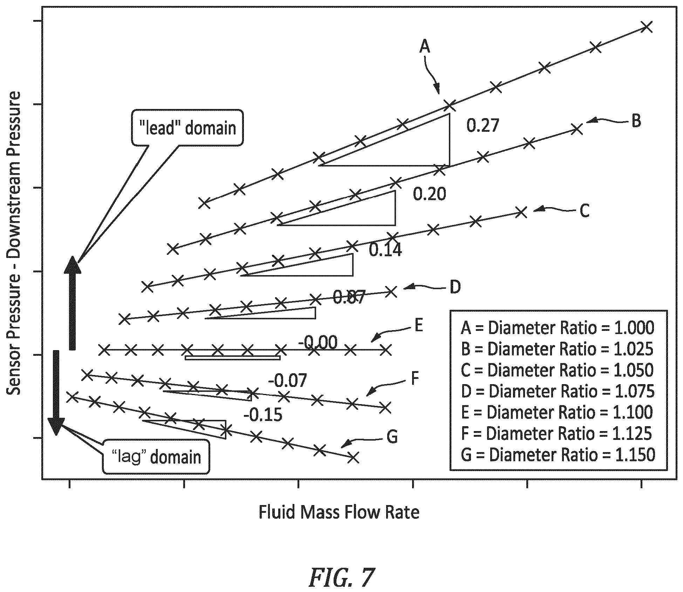

FIG. 5 is another nonlimiting example of a present disclosure fluid supply system 20 that includes a fluid tank 122, a fluid pump 124, a PRV 126 connected across the fluid pump 124, a flow restrictor 128, a fluid flow monitoring device 140, and a heat exchanger 132. The fluid flow monitoring device 140 either includes a PRV pressure sensor 30 or is in communication with a PRV pressure sensor 30 (see FIG. 6). The fluid flow monitoring device 140 embodiment diagrammatically shown in FIG. 6 includes an upstream orifice 48 in fluid communication with an upstream section of piping 50 from the pump 24, a sensing chamber 52, and a downstream orifice 54 in fluid communication with a downstream section of piping 56. The upstream orifice 48, sensing chamber 52, and downstream orifice 54 are in fluid communication with one another; e.g., fluid flows from the upstream section of piping 50, through upstream orifice 48, then through the sensing chamber 52, then through the downstream orifice 54, and enters the downstream section of piping 56. The upstream orifice 48 has an axial length 58 and an upstream orifice diameter. The upstream orifice axial length 58 may be about two to three times the upstream orifice diameter. The sensing chamber 52 has an inner diameter, an axial length 60, and a sensing orifice 62 having a sensing orifice diameter. The sensing chamber inner diameter may be at least twice the upstream orifice diameter. The sensing chamber axial length 60 may be in the range of about its own inner diameter up to about three times its inner diameter. The sensing chamber sensing orifice diameter is less than about twenty-five percent (25%) the axial length 60 of the sensing chamber 52. The sensing orifice diameter is in communication with the PRV pressure sensor 30. The downstream orifice 54 has an axial length 64 and a downstream orifice diameter. The downstream orifice 54 is in line with the upstream orifice 48. The downstream orifice axial length 64 is in the range of about two times the downstream orifice diameter to about ten times the downstream orifice diameter. The upstream section of piping 50 and the downstream section of piping 56 each have an inner diameter, although not necessarily the same inner diameter. The upstream orifice diameter may be less than the upstream section of piping 50 inner diameter and /or the downstream section of piping 56 inner diameter. The terms "upstream orifice diameter", "sensing chamber inner diameter", and "downstream orifice diameter" all refer to the inner diameter of the respective element that defines the flow passage therethrough. As shown in FIG. 7, the ratio of downstream orifice inner diameter to upstream orifice inner diameter (detailed below) is typically in the range of about 1.000 to about 1.150.

The present disclosure is not limited to the fluid flow monitoring device 140 dimensional parameters provided above. In preferred embodiments of this fluid flow monitoring device 140, the elements of the monitoring device 140 (i.e., upstream orifice 48, sensing chamber 52, and downstream orifice 54) are configured such that the basic resonant frequency of the device 140 is readily distinguishable from (e.g., at a higher frequency) than any source of excitation frequency present in the system (e.g., pump ripples). In this monitoring device 140 configuration, the sensing chamber 52 may be described in mechanical terms as functioning like a spring, wherein the fluid within the upstream orifice and the downstream orifice act as masses (with attendant inertia) acting on the "spring". When viewed in this manner, the internal geometry of the sensing chamber 52 (i.e., the internal volume) may include any geometry that permits the sensing chamber 52 to function as a spring. The dimensions of the monitoring device elements (i.e., upstream orifice 48, sensing chamber 52, and downstream orifice 54) provided above represent a nonlimiting example of a fluid flow monitoring device 140.

This fluid flow monitoring device 40 embodiment may be configured in a lag mode configuration or in a lead mode configuration. The structural distinction between the lag and lead mode configurations relates to the upstream orifice diameter and the downstream orifice diameter, or a ratio of the two. $\frac{Downstream Orifice Diameter}{Upstream Orifice Diameter} = Diameter Ratio$ Alternatively, the relationship between the upstream orifice diameter and the downstream orifice diameter may be expressed as a ratio of cross-sectional areas; i.e., upstream orifice cross-sectional area and downstream orifice cross-sectional area.

FIG. 7 is a graph of pressure difference between the sensing chamber static pressure (SCSP) and the system downstream static pressure (vertical axis) as a function of the fluid flow rate (horizontal axis). The system downstream static pressure for the data shown in FIG. 7 is assumed to be a fixed value for FIG. 7, for example, at a heat exchanger 32 (or other component having a volume of fluid) disposed within the system upstream of the fluid flow monitoring device 40. Each of the data lines A-G within FIG. 7 represents a particular Diameter Ratio; e.g., data line A has a Diameter Ratio of 1.000 indicating that the downstream orifice diameter is equal to the upstream orifice diameter. The remainder of the data lines represent instances wherein the downstream orifice diameter is greater than the upstream orifice diameter, as indicated by a Diameter Ratio greater than one. The data lines in FIG. 7 also include data lines having a positive slope (i.e., data lines A-D; "lead domain") and data lines having a negative slope (i.e., data lines E-G; "lag domain").

As can be seen from FIG. 7 and discussed above, a change in the fluid flow rate (e.g., an increase) will result in a change in the pressure difference between the sensing chamber static pressure and the system downstream static pressure. The amount of change in the pressure difference between the sensing chamber static pressure (SCSP) and the system downstream static pressure varies as a function of the Diameter Ratios. In some instances (i.e., data lines A-D; "lead domain"), the magnitude of the aforesaid pressure difference increases as the fluid flow rate increase. As will be described below, embodiments of the fluid flow monitoring device 140 may be configured to operate in the lead domain. In other instances (i.e., data lines E-G; "lag domain"), the magnitude of the aforesaid pressure difference decreases as the fluid flow rate increases. As will be described below, embodiments of the fluid flow monitoring device 140 may be configured to operate in the lag domain.

In those embodiments wherein the fluid flow monitoring device 140 is configured to operate in the lead domain (e.g., Diameter Ratios above about 1.100), an increase in fluid flow rate will result in an increase in sensor chamber static pressure (SPC) and therefore an increase in the pressure difference between the sensing chamber static pressure (SCSP) and the system downstream static pressure. The increase in the pressure difference between the sensing chamber static pressure (SCSP) and the system downstream static pressure will continue until the system downstream pressure has adjusted and the system returns to a steady state mode.

During operation, the increase in sensor chamber static pressure (SCSP) caused by the increase in fluid flow rate will be rapidly sensed by the PRV pressure sensor 30 sensing at the sensing orifice of the sensing chamber 52. Because the increase in sensor chamber static pressure (SCSP) precedes any change in the system downstream static pressure by some amount of time, the change in sensor chamber static pressure (SCSP) may be viewed as "anticipating" any change in system downstream static pressure that would normally occur absent some corrective action by the PRV 26. Signals produced by the PRV pressure sensor 30 representative of the change in sensor chamber static pressure (SCSP) are sent to the PRV 26, which in turn may be controlled to take corrective action (e.g., begin an opening movement) in response thereto for the purpose of maintaining or returning the system to steady state mode and thereby maintaining a constant system downstream static pressure (e.g., in the heat exchanger 32). In this manner, the fluid flow monitoring device 40 permits the system 20 to react more rapidly to the increase in the fluid flow rate (i.e., increase in pump speed) and thereby mitigates the potential for the PRV 26 to overshoot and "hunt" and enhances the ability of the fluid flow system 20 to operate in a steady state mode at the increased fluid flow rate.

In those embodiments wherein the fluid flow monitoring device 140 is configured to operate in the lag domain (e.g., Diameter Ratios at or below about 1.100), an increase in fluid flow rate will result in a decrease in sensor chamber static pressure (SCSP) and therefore a decrease in the pressure difference between the sensing chamber static pressure (SCSP) and the system downstream static pressure. The decrease in the pressure difference between the sensing chamber static pressure (SCSP) and the system downstream static pressure will continue until the system downstream pressure has adjusted and the system returns to a steady state mode. Operating in a lag domain may help avoiding undesirable pressure oscillations and PRV "hunting" between valve 26 and valve 36 as per FIG. 2.

While the principles of the disclosure have been described above in connection with specific apparatuses and methods, it is to be clearly understood that this description is made only by way of example and not as limitation on the scope of the invention, which scope is defined by the appended claims. Specific details are given in the above description to provide a thorough understanding of the embodiments. However, it is understood that the embodiments may be practiced without these specific details.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.
As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A fluid supply system (20), comprising
a fluid pump (24) configured to receive a fluid from a first conduit disposed upstream of the fluid pump (24) and to discharge fluid into a second conduit (44) downstream of the fluid pump (24);
a pressure sensor (30) configured to produce signals representative of a sensed fluid pressure;
a pressure relief valve (PRV) (26) having an inlet and an outlet and a fluid passage therethrough, wherein the PRV (26) is controllable to be in a closed configuration, or a fully open configuration, or a plurality of partially open configurations, wherein the PRV (26) is in signal communication with the pressure sensor (30); and
a fluid monitoring device (40) having a control orifice (42) in fluid communication with the second conduit (44) disposed upstream of the control orifice (42) and a third conduit (46) disposed downstream of the control orifice (42), wherein the second conduit (44) has a first inner diameter, the third conduit (46) has a second inner diameter, and the control orifice (42) has an orifice inner diameter, and the orifice inner diameter is less than both the first inner diameter and the second inner diameter;
wherein the pressure sensor (30) is disposed to sense fluid pressure in the third conduit (46) at a position downstream of the control orifice (42),
**characterised in that** the position is in close proximity to the control orifice (42) such that, in use, the sensed fluid pressure is the pressure of the fluid exiting the control orifice (42) before it diffuses.

2. The fluid supply system (20) of claim 1, wherein the control orifice inner diameter is no greater than half the first inner diameter.

3. The fluid supply system (20) of claim 1 or 2, wherein the second inner diameter is at least twice the control orifice inner diameter.

4. The fluid supply system (20) of claim 1, 2 or 3, wherein the control orifice (42) has an axial length (L), and an axial length over control orifice inner diameter ratio that is less than one.

5. The fluid supply system (20) of claim 1, 2 or 3, wherein the control orifice (42) has an axial length (L), and an axial length over control orifice inner diameter ratio that is at least two.

6. A fluid supply system (20), comprising:
a fluid pump (124) configured to receive a fluid from a first conduit disposed upstream of the fluid pump (124) and to discharge fluid into a second conduit (50) downstream of the fluid pump (124);
a pressure sensor (30) configured to produce signals representative of a sensed fluid pressure;
a pressure relief valve (PRV) (126) having an inlet and an outlet and a fluid passage therethrough, wherein the PRV (126) is controllable to be in a closed configuration, or a fully open configuration, or a plurality of partially open configurations, wherein the PRV (126) is in signal communication with the pressure sensor (30); and
a fluid monitoring device (140) having an upstream orifice (UO) (48) in fluid communication with the second conduit (50), a downstream orifice (DO) (54) in fluid communication with a third conduit (56), and a sensing chamber (SC) (52) in fluid communication with both the UO (48) and the DO (54), wherein the SC (52) includes a sensing orifice (62);
wherein the pressure sensor (30) is disposed to sense fluid pressure at the sensing orifice (62) of the SC (52),
**characterised in that**
the second conduit (50) has a second conduit inner diameter, the UO (48) has a UO inner diameter, the SC (52) has a SC inner diameter, the UO inner diameter is less than both the second conduit inner diameter and the SC inner diameter, the third conduit (56) has a third conduit inner diameter, the DO (54) has a DO inner diameter, the DO inner diameter is less than both the third conduit inner diameter and the SC inner diameter, and a ratio of the DO inner diameter to the UO inner diameter is in the range of about 1.000 to about 1.150.

7. The fluid supply system (20) of claim 6, wherein:
the UO (48) has a UO axial length (58), and the UO axial length (58) is in the range of about two to three times the UO inner diameter.

8. The fluid supply system (20) of claim 6 or 7, wherein:
the DO (54) has a DO axial length (64), and the DO axial length (64) is in the range of about two to ten times the DO inner diameter.

9. The fluid supply system (20) of claim 6, 7 or 8, wherein:
the SC (52) has a SC inner diameter and a SC axial length (60), and the SC axial length (60) is in the range of one SC inner diameter to three SC inner diameters.

10. The fluid supply system (20) of claim 6, 7, 8 or 9, wherein:
the sensing orifice (62) of the SC (52) has a diameter that is less than about twenty-five percent of the SC axial length (60).

11. The fluid supply system (20) of any of claims 6 to 10, wherein the UO (48) and the DO (54) are in line with one another.

12. A method of controlling fluid flow in a fluid supply system (20) having a fluid pump (124) configured to receive a fluid from a first conduit disposed upstream of the fluid pump (124) and to discharge fluid into a second conduit (50) downstream of the fluid pump (124), a pressure sensor (30) configured to produce signals representative of a sensed fluid pressure, and a pressure relief valve (PRV) (126) having an inlet and an outlet and a fluid passage therethrough, wherein the PRV (126) is controllable to be in a closed configuration, or a fully open configuration, or a plurality of partially open configurations, wherein the PRV (126) is in signal communication with the pressure sensor (30), the method comprising:
providing a fluid monitoring device (140) having an upstream orifice (UO) (48) in fluid communication with the second conduit (50), a downstream orifice (DO) (54) in fluid communication with a third conduit (56), and a sensing chamber (SC) (52) in fluid communication with both the UO (48) and the DO (54), wherein the SC (52) includes a sensing orifice (62);
using the pressure sensor (30) to sense fluid pressure at the sensing orifice (62) of the SC (52) and to produce the signals representative of the sensed fluid pressure; and
using the signals representative of the sensed fluid pressure to control the PRV (126),
wherein the second conduit (50) has a second conduit inner diameter, the UO (48) has a UO inner diameter, and the SC (52) has a SC inner diameter, wherein the UO inner diameter is less than both the second conduit inner diameter and the SC inner diameter, wherein the third conduit (56) has a third conduit inner diameter, and the DO (54) has a DO inner diameter, and the DO inner diameter is less than both the third conduit inner diameter and the SC inner diameter, and a ratio of the DO inner diameter to the UO inner diameter is in the range of about 1.000 to about 1.150.

13. The method of claim 12, wherein:
the ratio of the DO inner diameter to the UO inner diameter is in the range of about 1.100 to about 1.150.

14. The method of claim 12, wherein:
the ratio of the DO inner diameter to the UO inner diameter is in the range of about 1.000 to about 1.100.

## Patentansprüche

1. Fluidversorgungssystem (20), umfassend
eine Fluidpumpe (24), die ausgelegt ist, ein Fluid aus einer ersten Leitung, die stromaufwärts der Fluidpumpe (24) angeordnet ist, aufzunehmen und Fluid in eine zweite Leitung (44) stromabwärts der Fluidpumpe (24) abzugeben;
einen Drucksensor (30), der ausgelegt ist, Signale zu erzeugen, die repräsentativ für einen erfassten Fluiddruck sind;
ein Druckentlastungsventil (PRV) (26), das einen Einlass und einen Auslass und einen Fluiddurchgang dadurch aufweist, wobei das PRV (26) steuerbar ist, um in einer geschlossenen Konfiguration oder einer vollständig geöffneten Konfiguration oder einer Mehrzahl von teilweise geöffneten Konfigurationen zu sein, wobei das PRV (26) in Signalverbindung mit dem Drucksensor (30) ist; und
eine Fluidüberwachungsvorrichtung (40), die eine Steueröffnung (42) in Fluidverbindung mit der zweiten Leitung (44), die stromaufwärts der Steueröffnung (42) angeordnet ist, und einer dritten Leitung (46), die stromabwärts der Steueröffnung (42) angeordnet ist, aufweist, wobei die zweite Leitung (44) einen ersten Innendurchmesser aufweist, die dritte Leitung (46) einen zweiten Innendurchmesser aufweist und die Steueröffnung (42) einen Öffnungsinnendurchmesser aufweist, und der Öffnungsinnendurchmesser kleiner ist als sowohl der erste Innendurchmesser als auch der zweite Innendurchmesser;
wobei der Drucksensor (30) angeordnet ist, um Fluiddruck in der dritten Leitung (46) an einer Position stromabwärts der Steueröffnung (42) zu erfassen,
**dadurch gekennzeichnet, dass** die Position in unmittelbarer Nähe der Steueröffnung (42) liegt, sodass im Gebrauch der erfasste Fluiddruck der Druck des Fluids ist, das die Steueröffnung (42) verlässt, bevor es sich verteilt.

2. Fluidversorgungssystem (20) nach Anspruch 1, wobei der Innendurchmesser der Steueröffnung nicht größer als die Hälfte des ersten Innendurchmessers ist.

3. Fluidversorgungssystem (20) nach Anspruch 1 oder 2, wobei der zweite Innendurchmesser mindestens das Zweifache des Innendurchmessers der Steueröffnung beträgt.

4. Fluidversorgungssystem (20) nach Anspruch 1, 2 oder 3, wobei die Steueröffnung (42) eine axiale Länge (L) und ein Verhältnis von axialer Länge zu Innendurchmesser der Steueröffnung aufweist, das kleiner als eins ist.

5. Fluidversorgungssystem (20) nach Anspruch 1, 2 oder 3, wobei die Steueröffnung (42) eine axiale Länge (L) und ein Verhältnis von axialer Länge zu Innendurchmesser der Steueröffnung aufweist, das mindestens zwei beträgt.

6. Fluidversorgungssystem (20), umfassend:
eine Fluidpumpe (124), die ausgelegt ist, ein Fluid aus einer ersten Leitung, die stromaufwärts der Fluidpumpe (124) angeordnet ist, aufzunehmen und Fluid in eine zweite Leitung (50) stromabwärts der Fluidpumpe (124) abzugeben;
einen Drucksensor (30), der ausgelegt ist, Signale zu erzeugen, die repräsentativ für einen erfassten Fluiddruck sind;
ein Druckentlastungsventil (PRV) (126), das einen Einlass und einen Auslass und einen Fluiddurchgang dadurch aufweist, wobei das PRV (126) steuerbar ist, um in einer geschlossenen Konfiguration oder einer vollständig geöffneten Konfiguration oder einer Mehrzahl von teilweise geöffneten Konfigurationen zu sein, wobei das PRV (126) in Signalverbindung mit dem Drucksensor (30) ist; und
eine Fluidüberwachungsvorrichtung (140), die eine stromaufwärtige Öffnung (UO) (48) in Fluidverbindung mit der zweiten Leitung (50), eine stromabwärtige Öffnung (DO) (54) in Fluidverbindung mit einer dritten Leitung (56) und eine Erfassungskammer (SC) (52) in Fluidverbindung mit sowohl der UO (48) als auch der DO (54) aufweist, wobei die SC (52) eine Erfassungsöffnung (62) beinhaltet;
wobei der Drucksensor (30) angeordnet ist, um Fluiddruck an der Erfassungsöffnung (62) der SC (52) zu erfassen,
**dadurch gekennzeichnet, dass**
die zweite Leitung (50) einen Innendurchmesser der zweiten Leitung aufweist, die UO (48) einen UO-Innendurchmesser aufweist, die SC (52) einen SC-Innendurchmesser aufweist, der UO-Innendurchmesser kleiner ist als sowohl der Innendurchmesser der zweiten Leitung als auch der SC-Innendurchmesser, die dritte Leitung (56) einen Innendurchmesser der dritten Leitung aufweist, die DO (54) einen DO-Innendurchmesser aufweist, der DO-Innendurchmesser kleiner ist als sowohl der Innendurchmesser der dritten Leitung als auch der SC-Innendurchmesser, und ein Verhältnis des DO-Innendurchmessers zum UO-Innendurchmesser im Bereich von etwa 1,000 bis etwa 1,150 liegt.

7. Fluidversorgungssystem (20) nach Anspruch 6, wobei:
die UO (48) eine axiale UO-Länge (58) aufweist und die axiale UO-Länge (58) im Bereich von etwa dem Zwei- bis Dreifachen des UO-Innendurchmessers liegt.

8. Fluidversorgungssystem (20) nach Anspruch 6 oder 7, wobei: die DO (54) eine axiale DO-Länge (64) aufweist und die axiale DO-Länge (64) im Bereich von etwa dem Zwei- bis Zehnfachen des DO-Innendurchmessers liegt.

9. Fluidversorgungssystem (20) nach Anspruch 6, 7 oder 8, wobei: die SC (52) einen SC-Innendurchmesser und eine axiale SC-Länge (60) aufweist und die axiale SC-Länge (60) im Bereich von einem SC-Innendurchmesser bis drei SC-Innendurchmessern liegt.

10. Fluidversorgungssystem (20) nach Anspruch 6, 7, 8 oder 9, wobei:
die Erfassungsöffnung (62) der SC (52) einen Durchmesser aufweist, der kleiner als etwa fünfundzwanzig Prozent der axialen SC-Länge (60) ist.

11. Fluidversorgungssystem (20) nach einem der Ansprüche 6 bis 10, wobei die UO (48) und die DO (54) miteinander fluchten.

12. Verfahren zum Steuern eines Fluidstroms in einem Fluidversorgungssystem (20), das eine Fluidpumpe (124), die ausgelegt ist, ein Fluid aus einer ersten Leitung, die stromaufwärts der Fluidpumpe (124) angeordnet ist, aufzunehmen und Fluid in eine zweite Leitung (50) stromabwärts der Fluidpumpe (124) abzugeben, einen Drucksensor (30), der ausgelegt ist, Signale zu erzeugen, die repräsentativ für einen erfassten Fluiddruck sind, und ein Druckentlastungsventil (PRV) (126), das einen Einlass und einen Auslass und einen Fluiddurchgang dadurch aufweist, aufweist, wobei das PRV (126) steuerbar ist, um in einer geschlossenen Konfiguration oder einer vollständig geöffneten Konfiguration oder einer Mehrzahl von teilweise geöffneten Konfigurationen zu sein, wobei das PRV (126) in Signalverbindung mit dem Drucksensor (30) ist, wobei das Verfahren umfasst:
Bereitstellen einer Fluidüberwachungsvorrichtung (140), die eine stromaufwärtige Öffnung (UO) (48) in Fluidverbindung mit der zweiten Leitung (50), eine stromabwärtige Öffnung (DO) (54) in Fluidverbindung mit einer dritten Leitung (56) und eine Erfassungskammer (SC) (52) in Fluidverbindung mit sowohl der UO (48) als auch der DO (54) aufweist, wobei die SC (52) eine Erfassungsöffnung (62) beinhaltet;
Verwenden des Drucksensors (30), um Fluiddruck an der Erfassungsöffnung (62) der SC (52) zu erfassen und die Signale zu erzeugen, die repräsentativ für den erfassten Fluiddruck sind; und
Verwenden der Signale, die repräsentativ für den erfassten Fluiddruck sind, um das PRV (126) zu steuern,
wobei die zweite Leitung (50) einen Innendurchmesser der zweiten Leitung aufweist, die UO (48) einen UO-Innendurchmesser aufweist und die SC (52) einen SC-Innendurchmesser aufweist, wobei der UO-Innendurchmesser kleiner ist als sowohl der Innendurchmesser der zweiten Leitung als auch der SC-Innendurchmesser, wobei die dritte Leitung (56) einen Innendurchmesser der dritten Leitung aufweist und die DO (54) einen DO-Innendurchmesser aufweist und der DO-Innendurchmesser kleiner ist als sowohl der Innendurchmesser der dritten Leitung als auch der SC-Innendurchmesser, und ein Verhältnis des DO-Innendurchmessers zum UO-Innendurchmesser im Bereich von etwa 1,000 bis etwa 1,150 liegt.

13. Verfahren nach Anspruch 12, wobei:
das Verhältnis des DO-Innendurchmessers zum UO-Innendurchmesser im Bereich von etwa 1,100 bis etwa 1,150 liegt.

14. Verfahren nach Anspruch 12, wobei:
das Verhältnis des DO-Innendurchmessers zum UO-Innendurchmesser im Bereich von etwa 1,000 bis etwa 1,100 liegt.

## Revendications

1. Système d'alimentation en fluide (20), comprenant
une pompe à fluide (24) configurée pour recevoir un fluide provenant d'un premier conduit disposé en amont de la pompe à fluide (24) et pour refouler le fluide dans un deuxième conduit (44) en aval de la pompe à fluide (24) ;
un capteur de pression (30) configuré pour produire des signaux représentatifs d'une pression de fluide détectée ;
une soupape de décharge de pression (PRV) (26) comportant une entrée et une sortie et un passage de fluide à travers celle-ci, la PRV (26) étant contrôlable pour être dans une configuration fermée, ou une configuration totalement ouverte, ou une pluralité de configurations partiellement ouvertes, la PRV (26) étant en communication de signal avec le capteur de pression (30) ; et
un dispositif de surveillance des fluides (40) comportant un orifice de contrôle (42) en communication fluidique avec le deuxième conduit (44) disposé en amont de l'orifice de contrôle (42) et un troisième conduit (46) disposé en aval de l'orifice de contrôle (42), le deuxième conduit (44) comportant un premier diamètre intérieur, le troisième conduit (46) comportant un deuxième diamètre intérieur et l'orifice de contrôle (42) comportant un diamètre intérieur d'orifice, et le diamètre intérieur d'orifice étant inférieur tant au premier diamètre intérieur et qu'au deuxième diamètre intérieur ;
dans lequel le capteur de pression (30) est disposé pour détecter la pression du fluide dans le troisième conduit (46) à une position en aval de l'orifice de contrôle (42),
**caractérisé en ce que** la position est à proximité de l'orifice de contrôle (42) de sorte que, en utilisation, la pression du fluide détectée est la pression du fluide sortant de l'orifice de contrôle (42) avant qu'il ne se diffuse.

2. Système d'alimentation en fluide (20) selon la revendication 1, dans lequel le diamètre intérieur de l'orifice de contrôle n'est pas supérieur à la moitié du premier diamètre intérieur.

3. Système d'alimentation en fluide (20) selon la revendication 1 ou 2, dans lequel le deuxième diamètre intérieur est au moins deux fois le diamètre intérieur de l'orifice de contrôle.

4. Système d'alimentation en fluide (20) selon la revendication 1, 2 ou 3, dans lequel l'orifice de contrôle (42) comporte une longueur axiale (L) et un rapport entre la longueur axiale et le diamètre intérieur de l'orifice de contrôle inférieur à un.

5. Système d'alimentation en fluide (20) selon la revendication 1, 2 ou 3, dans lequel l'orifice de contrôle (42) comporte une longueur axiale (L) et un rapport entre la longueur axiale et le diamètre intérieur de l'orifice de contrôle qui est au moins égal à deux.

6. Système d'alimentation en fluide (20), comprenant :
une pompe à fluide (124) configurée pour recevoir un fluide provenant d'un premier conduit disposé en amont de la pompe à fluide (124) et pour refouler le fluide dans un deuxième conduit (50) en aval de la pompe à fluide (124) ;
un capteur de pression (30) configuré pour produire des signaux représentatifs d'une pression de fluide détectée ;
une soupape de décharge de pression (PRV) (126) comportant une entrée et une sortie et un passage de fluide à travers celle-ci, la PRV (126) étant contrôlable pour être dans une configuration fermée, ou une configuration totalement ouverte, ou une pluralité de configurations partiellement ouvertes, la PRV (126) étant en communication de signal avec le capteur de pression (30) ; et
un dispositif de surveillance des fluides (140) comportant un orifice amont (UO) (48) en communication fluidique avec le deuxième conduit (50), un orifice aval (DO) (54) en communication fluidique avec un troisième conduit (56) et une chambre de détection (SC) (52) en communication fluidique avec l'UO (48) et le DO (54), la SC (52) comprenant un orifice de détection (62) ;
dans lequel le capteur de pression (30) est disposé pour détecter la pression du fluide au niveau de l'orifice de détection (62) de la SC (52),
**caractérisé en ce que**
le deuxième conduit (50) comporte un deuxième diamètre intérieur de conduit, l'UO (48) comporte un diamètre intérieur d'UO, la SC (52) comporte un diamètre intérieur de SC, le diamètre intérieur d'UO est inférieur tant au diamètre intérieur qu'au deuxième conduit et au diamètre intérieur de SC, le troisième conduit (56) comporte un troisième diamètre intérieur de conduit, le DO (54) comporte un diamètre intérieur de DO, le diamètre intérieur de DO est inférieur tant au diamètre intérieur du troisième conduit qu'au diamètre intérieur de SC, et le rapport entre le diamètre intérieur de DO et le diamètre intérieur d'UO se situe dans la plage d'environ 1,000 à environ 1,150.

7. Système d'alimentation en fluide (20) selon la revendication 6, dans lequel :
l'UO (48) comporte une longueur axiale d'UO (58), et la longueur axiale d'UO (58) se situe dans la plage d'environ deux à trois fois le diamètre intérieur d'UO.

8. Système d'alimentation en fluide (20) selon la revendication 6 ou 7, dans lequel :
le DO (54) comporte une longueur axiale de DO (64), et la longueur axiale de DO (64) se situe dans la plage d'environ deux à dix fois le diamètre intérieur de DO.

9. Système d''alimentation en fluide (20) selon la revendication 6, 7 ou 8, dans lequel :
le SC (52) comporte un diamètre intérieur de SC et une longueur axiale de SC (60), et la longueur axiale de SC (60) se situe dans la plage d'un diamètre intérieur de SC à trois diamètres intérieurs de SC.

10. Système d'alimentation en fluide (20) selon la revendication 6, 7, 8 ou 9, dans lequel :
l'orifice de détection (62) du SC (52) comporte un diamètre inférieur à environ vingt-cinq pour cent de la longueur axiale de SC (60).

11. Système d'alimentation en fluide (20) selon l'une quelconque des revendications 6 à 10, dans lequel l'UO (48) et le DO (54) sont alignés l'un avec l'autre.

12. Procédé de contrôle du débit de fluide dans un système d'alimentation en fluide (20) comportant une pompe à fluide (124) configurée pour recevoir un fluide provenant d'un premier conduit situé en amont de la pompe (124) et pour refouler le fluide dans un second conduit (50) situé en aval de la pompe (124), un capteur de pression (30) configuré pour produire des signaux représentatifs d'une pression de fluide mesurée, et une soupape de décharge de pression (PRV) (126) comportant une entrée, une sortie et un passage de fluide, la PRV (126) étant contrôlable pour être dans une configuration fermée, ou une configuration totalement ouverte, ou une pluralité de configurations partiellement ouvertes, la PRV (126) étant en communication de signal avec le capteur de pression (30), le procédé comprenant :
la fourniture d'un dispositif de surveillance des fluides (140) comportant un orifice amont (UO) (48) en communication fluidique avec le deuxième conduit (50), un orifice aval (DO) (54) en communication fluidique avec un troisième conduit (56) et une chambre de détection (SC) (52) en communication fluidique avec l'UO (48) et le DO (54), la SC (52) comprenant un orifice de détection (62) ;
l'utilisation du capteur de pression (30) pour détecter la pression du fluide à l'orifice de détection (62) de la SC (52) et pour produire les signaux représentatifs de la pression du fluide détectée ; et
l'utilisation des signaux représentatifs de la pression du fluide détectée pour contrôler la PRV (126),
dans lequel le deuxième conduit (50) comporte un deuxième diamètre intérieur de conduit, l'UO (48) comporte un diamètre intérieur d'UO, et la SC (52) comporte un diamètre intérieur de SC, dans lequel le diamètre intérieur d'UO est inférieur tant au diamètre intérieur qu'au deuxième conduit et au diamètre intérieur de SC, dans lequel le troisième conduit (56) comporte un troisième diamètre intérieur de conduit, le DO (54) comporte un diamètre intérieur de DO, le diamètre intérieur de DO est inférieur tant au diamètre intérieur du troisième conduit qu'au diamètre intérieur de SC, et le rapport entre le diamètre intérieur de DO et le diamètre intérieur d'UO se situe dans la plage d'environ 1,000 à environ 1,150.

13. Procédé selon la revendication 12, dans lequel :
le rapport entre le diamètre intérieur de DO et le diamètre intérieur d'UO se situe dans la plage d'environ 1,100 à environ 1,150.

14. Procédé selon la revendication 12, dans lequel :
le rapport entre le diamètre intérieur de DO et le diamètre intérieur d'UO se situe dans la plage d'environ 1,000 à environ 1,100.
